# EUROPÄISCHE PATENTSCHRIFT

(11) **EP 2 735 397 B1**
(45) Veröffentlichungstag und Bekanntmachung des Hinweises auf die Patenterteilung: **17.01.2018**
(21) Anmeldenummer: 13182307.2
(22) Anmeldetag: 30.08.2013
(51) Int. Cl.: H01R 4/18, B23K 20/12, H01R 4/02, H01R 4/62, H01R 11/28, H01R 43/02, B23K 101/32, B23K 101/38, B23K 103/10, B23K 103/12, B23K 103/18

(54) **Verfahren zum elektrisch leitenden Verbinden eines Kontaktteils mit einem elektrischen Leiter**
Method of electrically conductive connecting a contact component with an electrical conductor
Procédé de connection électrique d'une pièce de contact à un conducteur électrique

(30) Priorität: 23.11.2012 EP 12306457
(43) Veröffentlichungstag der Anmeldung: 28.05.2014
(73) Patentinhaber: Nexans, 92400 Courbevoie (FR); Technische Universität Ilmenau, 98693 Ilmenau (DE)
(72) Erfinder: Dr. Mayer, Udo, 92637 Weiden (DE); Dr. Steinberg, Helmut, 92721 Störnstein (DE); Pedimonte, Andreas, 92637 Weiden (DE); Dr.-Ing. Bergmann, Jean Pierre, 99096 Erfurt (DE); Schürer, René, 98693 Ilmenau (DE); Müller, Toni, 99867 Gotha (DE)
(74) Vertreter: Döring, Roger

(56) Entgegenhaltungen:
- WO-A1-98/27619
- JP-A- 2002 144 053
- JP-A- 2003 149 382
- US-A1- 2004 029 454
- US-A1- 2008 251 571

## Beschreibung

Die Erfindung bezieht sich auf ein Verfahren zum elektrisch leitenden Verbinden eines Kontaktteils auf Kupferbasis mit einem aus einer Vielzahl von Aluminium enthaltenden Einzeldrähten bestehenden elektrischen Leiter, siehe Anspruch 1.

Das Kontaktteil auf Kupferbasis besteht entweder aus Kupfer oder aus einer Kupferlegierung. Es kann auf seiner äußeren Oberfläche zusätzlich eine Schicht aus beispielsweise zum Zinn, Zink oder Nickel aufweisen, die beispielsweise galvanisch abgeschieden ist. Das Kontaktteil wird im Folgenden ohne Materialangabe nur als Kontaktteil bezeichnet. Die Einzeldrähte des Leiters bestehen entweder aus Aluminium oder aus einer Aluminiumlegierung. Im Folgenden wird nur das Material Aluminium berücksichtigt.

Leiter aus Aluminium werden insbesondere aus Gewichts- und Kostengründen vermehrt als Ersatz für Kupferleiter verwendet. Haupteinsatzgebiete derartiger Leiter sind beispielsweise die Automobil- und die Flugzeugtechnik. Die geringere elektrische Leitfähigkeit des Aluminiums gegenüber Kupfer spielt für die meisten Anwendungen keine Rolle. Probleme ergeben sich aber beim Anbringen von Kontaktteilen an den Leitern, da Aluminiumleiter von einer elektrisch sehr schlecht leitenden Oxidschicht umgeben sind. Dieser Mangel macht sich besonders bei aus einer Vielzahl von Einzeldrähten bestehenden, auch als Litzenleiter bezeichneten Leitern bemerkbar, von denen jeder von einer ohne Sonderbehandlung nicht zu vermeidenden Oxidschicht umgeben ist. Diese Problematik ist seit langem bekannt und in zahlreichen Druckschriften beschrieben, von denen im Folgenden vier Schriften erwähnt sind.

Bei der Anordnung nach der JP 2003 149382 A werden jeweils zwei Platten, welche geometrisch gleich aufgebaut sind und aus dem gleichen Material bestehen, beispielsweise Plastik oder Aluminium, anihren Längskanten mittels eines sich drehenden Werkzeugs miteinanderverschweißt. Aus vierderartig zusammengefügten Platten wird ein Führung skanal für Benzin mit einem quadratischen Hohlraum erzeugt.

Die US 2004/0029454 A1, die den nächstliegenden Stand der Technik dieser Anmeldung darstellt, beschreibt zwei miteinander zu verbindende Teile, die aus vielen unterschiedlichen Materialien bestehen können, nämlich eine zweistufige Hülse mit zwei unterschiedlichen Durchmessern und einen aus Einzeldrähten bestehenden elektrischen Leiter. Die zweistufige Hülse wird so auf das Ende eines abisolierten Leiters aufgeschoben, daß sie mit ihrem kleineren Durchmesser am Leiter und mit ihrem größerer Durchmesser an der veibleibenden Isolierung des Leiters anliegt. Die Hülse ist an beiden axialen Enden offen. Sie wird an ihrem auf der Isolierung des Leiters aufliegenden Ende durch Stauchen abgedichtet. An die Hülse wird ein Kontaktelement mittels einer Ultraschallanlage angeschweißt.

Aus der DE 102 23 397 B4 geht ein Verfahren hervor, mit dem ein Kontaktelement elektrisch gutleitend an einem Litzenleiter aus Aluminiumdrähten angebracht werden soll. Dazu wird auf das Ende des Litzenleiters zunächs teine an der Innenseite verzinnte metallische Hülse aufgeschoben. Die Einzeldrähte werden dann an ihren Stirnseiten untereinander und mit der Hülse mittels Ultraschalls oder Schutzgasschweißens verzinnt oder verschweißt. Die die Einzelleiter umgebenden Oxidschichten sollen dabei aufgebrochen werden. Es ergibt sich eine deckelartige Verzinnung bzw. Verschweißung am Ende des Litzenleiters. Abschließend wird das Köntaktelement aufgeschoben und mit dem Ende des Litzenleiters verpreßt. Die deckelartige Verzinnung bzw. Verschweißung wird vom Verpressen ausgenommen.

Die DE 103 46 160 B3 beschreibt ein Verfahren zur Kontaktierung eines als Litzenleiter ausgeführten Aluminiumleiters, bei welchem auf das Ende des Aluminiumleiters eine an der Innenseite verzinnte, beispielsweise aus Kupfer bestehende Köntaktklemme aufgeschoben wird. Die rohrförmig ausgeführte Kontaktklemme wird an der Stirnseite des Aluminiumleiters mittels Ultraschall-Verzinnung gemeinsam mit demselben verzinnt oder mittels eines bekannten Schweißverfahrens metallisch mit demselben verschweißt.

Bei dem Verfahren nach der DE 103 57 048 A1 wird auf das Ende eines aus Aluminium bestehenden Litzenleiters ein Vorrat eines Kontaktierungsmittels aufgebracht und zumindest bis in den Bereich seiner Schmelztemperatur erwärmt. Dabei soll über das Kontaktierungsmittel zur Ausbildung einer elektrischen Kontaktierung eine stoffliche Verbindung zwischen dem Litzenleiter und einem gleichzeitig oder anschließend aufgeschobenen topfartigen Kontaktelement hergestellt werden. Zum Aufbringen des Kontaktierungsmittels kann der Litzenleiter inin Zinnbad eingetaucht werden. Dabei kann ein Teil des Litzenleiters zur Bildung einer frischen Trenn- oder Schneidfläche im Zinnbad abgetrennt oder abgeschnitten werden. Das Kontaktelement wird mit zugentlastender Wirkung um den Litzenleiter herumgepreßt.

Die DE 10 2011 018 353 A1 beschreibt ein Verfahren zum Verbinden eines Kontaktteils mit einem aus Aluminium bestehenden Litzenleiter. Auf den Litzenleiter wind an seinem Ende eine Stützhülse aufgebracht und mit demselben verpreßt. Anschließend wird ein rotationssymmetrisches Kontaktteil mit der Stirnseite des Litzenleiters verschweißt, beispielsweise mittels Rotationsreibschweißens. Dabei wird eine intermetallische Verbindung zwischen dem Kontaktteil und dem Litzenleiter gebildet.

Der Erfindung liegt die Aufgabe zugrunde, ein Verfahren mit zugehöriger Anordnung zum Verbinden eines Kontaktteils mit einem aus Einzeldrähten bestehenden Aluminiumleiter anzugeben, mit dem eine wirksame den ganzen Querschnitt des Aluminiumleiters erfassende elektrisch leitende Verbindung zum Kontaktteil erreicht werden kann.

Diese Aufgabe wird durch die Gesamtheit der Merkmale des Anspruchs 1 gelöst.

Bei Einsatz dieses Verfahrens wird der Leiter an seinem Ende zunächst von gegebenenfalls vorhandenen Schichten befreit, insbesondere von einer denselben umgebenden Isolierung. Auf das so freigelegte Ende des Leiters wird die Hülse des Kontaktteils aufgeschoben, die so bemessen ist, daß sie den Leiter bzw. dessen Einzeldrähte dicht anliegend umgibt. Das Kontaktteil wird so weit auf den leiter aufgeschoben, bis dessen Stirnseite am Boden des Kontaktteils anliegt. Zusatzwerkstoff, wie beispielsweise Zinn, oder Befestigungselemente werden dabei nicht eingesetzt. Danach kann das Werkzeug zumindest an den Boden des Kontaktteils angelegt und gegen denselben gedrückt werden.

Beim Anlegen des Werkzeugs an das Kontaktteil ist dasselbe mit Vorteil bereits in Rotation versetzt. Es kann aber auch erst nach dem Anlegen an das Kontaktteil in Rotation versetzt werden. Das Werkzeug rotiert bei Durchführung des Verfahrens mit ausreichend hoher Drehzahl, so daß infolge der durch Reibung erzeugten hohen Temperatur das Aluminium des Leiters in einen teigigen Zustand übergeht. Das Material des Kontaktteils wird bei diesem Vorgang zwar ebenfalls erwärmt, aber nur so weit, daß die Wandung des Kontaktteils in Richtung des Leiters eingedrückt werden kann. Eine Durchbrechung der Wandung des Kontaktteils findet nicht statt. Wenn die gewünschte Temperatur erreicht ist, ist das Aluminium des Leiters so weitgehend erweicht, daß es sich mit dem Köntaktteil stoffschlüssig verbindet bzw. durch Diffusion mit dem Kontaktteil verschweißt. Das wird durch die erhöhte Temperatur und den vom Werkzeug auf das Köntaktteil ausgeübten Druck erreicht. Im Leiter vorhandene Oxidschichten werden dabei aufgebrochen, so daß sie die elektrisch leitende Verbindung zwischen Leiter und Kontakttei lnicht behindern. Das Werkzeug kann danach vom Kontaktteil entfernt werden.

Mit Vorteil wird das Werkzeug zusätzlich auch oder ausschließlich an der Umfangsfläche der Hülse eingesetzt. Dabei kann das Werkzeug beispielsweise an drei um 120° in Umfangsrichtung versetzten Stellen, aber auch in mehr als drei unterschiedlichen Positionen an die Hülse angedrückt werden. Es ist dabei auch möglich, gleichzeitig zwei oder mehr Werkzeuge einzusetzen.

In allen Ausführungsformen des Verfahrens ist es zumindest sinnvoll, das Kontaktteil so "festzuhalten", daß es sich beim Betrieb des Werkzeugs nicht auf dem Leiter drehen kann. Dazu kann das Köntaktteil mit dem Leiter verpreßt werden. Es ist aber auch möglich, das Kontaktteil in einer Haltevorrichtung zu fixieren.

In einer weiteren Ausführungsform des Verfahrens ist es auch möglich, das Kontaktteil mit umschlossenem Leiter um die Achse desselben zu drehen, mit einem Winkel von maximal 360°, wenn ein sich drehendes Werkzeug unter Druck an seiner Umfangsfläche anliegt.

In einer anderen weiteren Ausführungsform des Verfahrens kann ein Werkzeug eingesetzt werden, das bezogen auf die Achse des Leiters in radialer Richtung verstellbar ist und das sich um das Kontaktteil herumdreht. Das Werkzeug wird in radialer Richtung in das Kontaktteil eingedrückt. Es erzeugt dabei eine umlaufende Nut in demselben.

Das Verfahren nach der Erfindung wird im Folgenden anhand der Zeichnungen in Ausführungsbeispielen erläutert.

Es zeigen:
Fig. 1 ein topfartiges Kontaktteil und das Ende eines aus Einzeldrähten aufgebauten elektrischen Leiters getrennt voneinander.
Fig. 2 das vom Kontaktteil nach Fig. 1 umschlossene Ende des Leiters zusammen mit einem schematisch angedeuteten Werkzeug.
Fig. 3 das Leiterende mit in das Kontaktteil eingedrungenem Werkzeug.
Fig. 4 und 5 von Fig. 3 abweichende Ausführungsformen des Leiterendes.
Fig. 6 das Ende eines bei dem Verfahren einsetzbaren Werkzeugs.
Fig. 7 bis 9 gegenüber Fig. 6 abgewandelte Werkzeuge in unterschiedlichen Ausführungsformen.

Das Verfahren nach der Erfindung ist ein Schweißverfahren, bei dem die für eine Verschweißung von Kontaktteil und Leiter benötigte erhöhte Temperatur durch Reibung erzeugt wird. Es wird auch als "Rührreibschweißen" bezeichnet und bewirkt, daß das Aluminium des Leiters bei einer unterhalb der Schmelztemperatur desselben liegenden Temperatur sich mit dem Kupfer des Kontaktteils stoffschlüssig verbindet bzw. durch Diffusion mit demselben verschweißt, bedingt auch durch den durch das Werkzeug aufgebrachten Druck und die dadurch verrichtete Umformameit. Das bei dem Verfahren eingesetzte Werkzeug hat dementsprechend eine Reibfläche, mit der es an das Kontaktteil mit anhaltendem Druck angedrückt bzw. in die Wandung desselben eingedrückt wird. Die Reibfläche muß so ausgeführt sein, daß die Wandung des Kontaktteils beim Betrieb des Werkzeugs nicht beschädigt und insbesndere nicht durchbrochen wird. Von der als Reibfläche dienenden Stirnfläche des Werkzeugs kann ein Vorsprung abstehen, der symmetrisch aber auch exzentrisch zur Drehachse des Werkzeugs angeordnet sein kann.

In der folgenden Beschreibung wird in der Ausführungsform des Werkzeugs mit einem Vorsprung nur ein symmetrisch angeordneter Vorsprung berücksichtigt. Ein solches Weikzeug ist auch in den Zeichnungen dargestellt. Das Werkzeug kann aber auch ohne Vorsprung ausgeführt sein. Es wird zu Beginn des Verfahrens an das Kontaktteil angelegt und während seiner Drehung in Richtung auf das Kontaktteil verschoben, so daß es ständig unter Druck an demselben anliegt. Es kann - wie bereits erwähnt - in bevorzugter Ausführungsform bereits vor dem Anlegen an das Kontaktteil in Rotation versetzt worden sein.

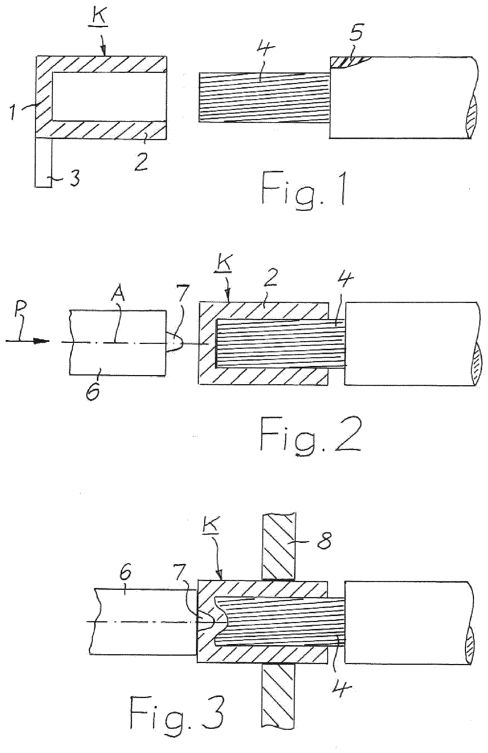

In Fig. 1 sind schematisch ein Schnitt durch ein Kontaktteil K und das Ende eines Leiters dargestellt. Das Köntaktteil K besteht aus Kupfer oder aus einer Kupferlegierung. Es wird im Folgenden weiter nur als "Kontaktteil" bezeichnet. Der Leiter besteht aus einer Vielzahl von Einzeldrähten aus Aluminium oder einer Aluminiumlegierung. Er wird im Folgenden weiter nur als "Leiter" bezeichnet.

Das Kontaktteil K ist topfartig ausgeführt. Es hat einen Boden 1 und eine einstückig mit demselben veibundene und von demselben abstehende zylindrische Hülse 2. Das Kontaktteil K kann mit einem Anschlußelement 3 zum Anschließen von weiterführenden Leitern ausgerüstet sein. Das Anschlußelement 3 kann entsprechend der zeichnerischen Darstellung in radialer Richtung vom Kontaktteil K abstehen. Es kann aber auch in axialer Richtung verlaufend an demselben angebracht sein. Der Leiter 4 besteht aus einer Vielzahl von beispielsweise miteinander verseilten Einzeldrähten. Er ist von einer Isolierung 5 umgeben, die gemäß Fig. 1 am Ende des Leiters 4 entfernt ist, so daß die Einzeldrähte freiliegen.

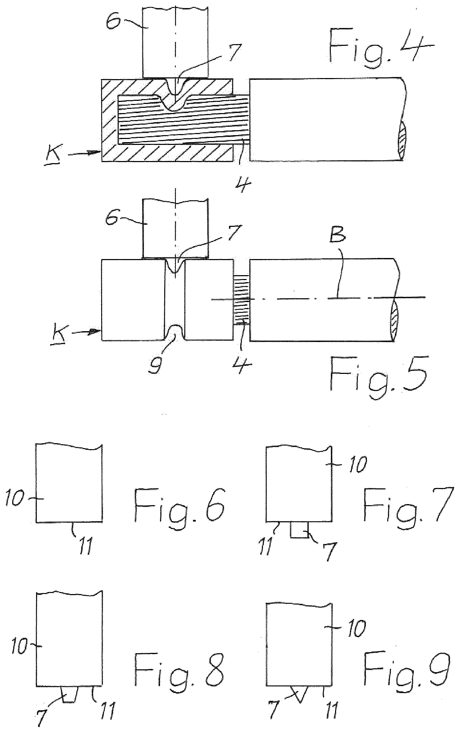

Zur Durchführung des Verfahrens wird das Kontaktteil K so weit auf den Leiter 4 aufgeschoben, bis dessen Stirnseite entsprechend Fig. 2 am Boden 1 des Kontaktteils K anliegt. Die Hülse 2 des Kontaktteils K ist so bemessen, daß sie dicht am Leiter 4 anliegt und denselben fest umschließt. An das Kontaktteil K wird dann ein Werkzeug 6 angelegt, das mit einem stiftartigen Vorsprung 7 ausgerüstet ist. Das Werkzeug 6 besteht mit Vorteil aus Stahl. Es muß auf jeden Fall härter als das Material des Kontaktteils K sein. Mögliche Formen des Werkzeugs 6 werden anhand der Fig. 7 bis 9 erläutert. Durch die Drehung des Werkzeugs 6 um seine Achse A wird der Boden 1 des Kontaktteils K durch Reibung erwärmt. Um eine Drehung des Kontaktteils K auf dem Leiter 4 während der Durchführung des Verfahrens auszuschließen, kann das Kontaktteil K mit dem Leiter 4 verpreßt oder durch eine außen angreifende Haltevorrichtung in Position gehalten werden.

Das Werkzeug 6 wird bei Durchführung des Verfahrens beispielsweise durch einen Elektromotor um seine Achse A in Drehung versetzt und danach in Richtung des Pfeiles P bewegt. Es wird danach mit anhaltendem Druck gegen den Boden 1 des Kontaktteils K gedrückt, so daß das Material desselben durch Reibung erwärmt wird. Diese Erwärmung wird vom Kontaktteil K auf den mit seiner Stirnseite am Boden 1 desselben anliegenden Leiter 4 übertragen. Das Verfahren wird bei ausreichend hoher Drehzahl des Werkzeugs 6 solange durchgeführt, bis das Material des Leiters 4 in einen teigigen Zustand übergegangen ist, so daß es sich mit dem Kontaktteil K stoffschlüssig verbindet bzw. durch Diffusion mit demselben verschweißt. Die entsprechende Temperatur liegt unterhalb von 500 °C, also relativ weit unterhalb der Schmelztemperatur von Aluminium, die etwa 658 °C beträgt.

Die Drehzahl des Werkzeugs 6 beträgt bei Durchführung des Verfahrens beispielsweise 3000 Umdrehungen pro Minute. Das Werkzeug 6 wird beispielsweise mit einem Vorschub von 150 mm pro Minute an das Kontaktteil K angedrückt und dabei beispielweise abschnittsweise um 0,15 mm bewegt. Die Verfahrensdauer liegt mit Vorteil zwischen 0,5 Sekunden und 5,0 Sekunden.

Das Material des Bodens 1 des Kontaktteils K wird bei der angegebenen Temperatur plastiziert und umgeformt. Der Boden 1 des Kontaktteils K wird daher durch das Werkzeug 6 und insbesondere den Vorsprung 7 ohne Durchbrechung seiner Wandung nur in den Leiter 4 hineingedrückt, so wie es schematisch aus Fig. 3 hervorgeht. Er erhält dadurch eine im Leiter 4 liegende Delle mit gegenüber dem planen Boden vergrößerter Oberfläche und entsprechend vergrößerter Köntaktfläche zum Leiter 4. Während der geschilderten Durchführung des Verfahrens kann das Kontaktteil K durch eine außen an demselben angreifende Haltevorrichtung 8, die in Fig. 3 nur schematisch angedeutet ist, in Position gehalten werden. Sie verhindert insbesondere ein Drehen des Kontaktteils K auf dem Leiter 4.

Das Kontaktteil K kann auch oder zusätzlich im Bereich seiner Hülse 2 mittels eines Werkzeugs 6 im geschilderten Sinne bearbeitet werden. Dazu wild das Werkzeug 6 gemäß Fig. 4 in radialer Richtung an die Hülse 2 angelegt. Auch an der entsprechenden Stelle wird die Temperatur durch Reibung zwischen dem Werkzeug 6 und der Hülse 2 so weiter höht, bis die geschilderte Verbindung bzw. Veischweißung zwischen Hülse 2 und Leiter 4 erreicht ist. Mit Vorteil wird die Hülse 2 an drei um 120° in Umfangsrichtung versetzten Stellen im geschildeiten Sinne bearbeitet. Es können aber auch mehr als drei Stellen sein, die beliebig auf der Umfangsfläche der Hülse 2 verteilt sind. Insbesondere bei dieser Ausführungsform des Verfahrens können auch zwei oder mehr Werkzeuge mit einem beispielsweise für das Werkzeug 6 geschilderten Aufbau gleichzeitig eingesetzt werden.

In einer weiteren Ausführungsform des Verfahrens kann der Leiter 4 mit daran fest und unverdrehbar angebrachtem Kontaktteil K auch unter dem sich um seine Achse drehenden Werkzeug 6 mit Vorsprung 7 gedreht werden, und zwar gemäß der schematischen Darstellung in Fig. 5 um seine Achse B. Die Drehung des Leiters 4 erfolgt dabei mit Vorteil um maximal 360°, und zwar beispielsweise mit dauernd wechselnder Drehrichtung. Es ergibt sich dann abschließend in der Hülse 2 des Kontaktteils K eine in Umfangsrichtung umlaufende Nut 9 mit darunter liegendem, metallurgisch fest verbundenem Material des Leiters 4. In diesem Sinne können auch zwei oder mehr parallel zueinander verlaufende Nuten in der Hülse 2 erzeugt werden.

Eine mögliche Form des Werkzeugs 6 geht aus Fig. 6 hervor. Es hat einen vorzugsweise zylindrischen Bolzen 10 mit kreisförmigem Querschnitt und einer planen, rechtwinklig zu seiner Achse A verlaufenden Stirnfläche 11. Der Bolzen 10 könnte auch einen polygonalen Querschnitt haben. Die Stirnfläche 11 ist die am Kontaktteil K anliegende Reibfläche des Werkzeugs 6.

Gemäß den Fig. 7 bis 9 hat der Bolzen 10 des Werkzeugs 6 eine durch den von seiner Stirnfläche 11 abstehenden Vorsprung 7 vergrößerte Reibfläche. Die radialen Abmessungen des Vorsprungs 7 sind kleiner als die radialen Abmessungen des Bolzens 10.

Der Vorsprung 7 kann gemäß Fig. 7 zylindrischausgeführt sein. Er kann an seinem freien Ende auch mit einer Fase versehen oder abgerundet sein.

Entsprechend Fig. 8 kann der Vorsprung 7 auch konisch aus geführt sein, mit einer vom Bolzen 10 wegweisenden Verjüngung.

Bei den Formen nach den Fig. 7 und 8 kann der Vorsprung 7 zusätzlich mit einem Gewinde versehen sein.

Eine weitere Form des Vorsprungs 7 geht aus Fig. 9 hervor. Der Vorsprung 7 ist demnach vom Boden 10 wegweisend spitz zulaufend ausgeführt.

## Patentansprüche

1. Verfahren zum elektrisch leitenden Verbinden eines Kontaktteils (K) auf Kupferbasis mit einem aus einer Vielzahl von Aluminium enthaltenden Einzeldrähten bestehenden elektrischen Leiter (4), mit welchem ein topfartiges Kontaktteil (K), das einen Boden (1) und eine einstückig mit demselben verbundene und von demselben abstehende zylindrische Hülse (2) aufweist, unter dichter Anlage der Hülse (2) am Leiter (4) so weit auf denselben aufgeschoben wird, bis die Stirnfläche des Leiters (4) am Boden (1) des Kontaktteils (K) anliegt, mit welchem danach an das Kontaktteil (K) zumindest im Bereich des Bodens (1) desselben mindestens ein sich drehendes Werkzeug (6) mit anhaltendem Druck angelegt wird, bis infolge von dabei durch Reibung erzeugter erhöhter Temperatur das Material des Leiters (4) so weit erweicht ist, dass es sich mit dem Kontaktteil stoffschlüssig verbindet, wobei das Kontaktteil (K) und der Leiter (4) durch das sich drehende Werkzeug (6) unter Aufrechterhaltung des von demselben auf das Kontaktteil (K) ausgeübten Druckes so weit erwärmt werden, bis das Material des Leiters (4) bei einer unterhalb der Schmelztemperatur desselben liegenden Temperatur durch Diffusion mit dem Kontaktteil (K) verschweißt, wobei die Wandung des Kontaktteils (K) durch das Werkzeug (6) nicht durchbrochen wird, und mit welchem abschließend das Werkzeug (6) vom Kontaktteil (K) entfernt wird.

## Claims

1. A method for electrically conductively connecting a copper contact part (K) to an electrical conductor (4) comprising a plurality of individual wires containing aluminium, by which a cup-shaped contact part (K), which has a bottom (1) and a cylindrical sleeve (2) integrally connected to and projecting away from the bottom, is pushed onto the conductor with tight contact of the sleeve (2) to the conductor (4) until the end face of the conductor (4) abuts to the bottom (1) of the contact part (K), by which thereafter at least one rotating tool (6) is placed with sustained pressure at least in the area of the bottom (1) of the contact part (K) until the material of the conductor is softened due to an increased temperature due to friction to such an extent that the conductor integrally connects to the contact part, wherein the contact part (K) and the conductor (4) are heated by the rotating tool (6) while maintaining the pressure exerted by the tool on the contact part (K) to such an extent until the material of the conductor (4) is welded by diffusion to the contact part (K) at a temperature which is lower than the melting temperature of the conductor (4), the wall of the contact part (K) being not perforated by the tool (6), and by which finally the tool (6) is removed from the contact part (K).

## Revendications

1. Procédé pour la connexion électriquement conductrice d'une partie de contact (K) à base de cuivre à un conducteur électrique (4) constitué d'une pluralité de fils individuels contenant de l'aluminium, avec lequel une partie de contact (K) en forme de coupelle, qui présente un fond (1) et un manchon cylindrique (2) relié d'un seul tenant à celui-ci et dépassant de celui-ci, est poussé sur le conducteur (4) en formant un appui étanche du manchon (2) sur ce dernier, jusqu'à ce que la surface avant du conducteur (4) soit en appui sur le fond (1) du de la partie de contact (K), avec lequel au moins un outil rotatif (6) est ensuite appliqué avec une pression de maintien sur la partie de contact (K) au moins dans la région du fond (1) de celle-ci, jusqu'à ce que le matériau du conducteur (4) soit amolli en raison de la température élevée ainsi produite par le frottement, à un point tel qu'il se lie par complémentarité de matériau à la partie de contact, dans lequel la partie de contact (K) et le conducteur (4) sont chauffés par l'outil rotatif (6) tout en maintenant la pression exercée par celui-ci sur la partie de contact (K) jusqu'à ce que le matériau du conducteur (4) soit soudé par diffusion à la partie de contact (K) à une température inférieure à sa température de fusion, dans lequel la paroi de la partie de contact (K) n'est pas percée par l'outil (6), et avec lequel l'outil (6) est ensuite retiré de la partie de contact (K).
